# EUROPÄISCHE PATENTANMELDUNG

(11) **EP 3 706 013 A1**
(43) Veröffentlichungstag der Anmeldung: **09.09.2020**
(21) Anmeldenummer: 19161658.0
(22) Anmeldetag: 08.03.2019
(51) Int. Cl.: G06F 16/31

(54) **KONZISE, ZUTREFFENDE INDEXIERUNG**

(71) Anmelder: Hospitality Digital GmbH, 40235 Düsseldorf (DE)
(72) Erfinder: GLÄSER, Volker, 40235 Düsseldorf (DE)
(74) Vertreter: Maiwald Patent- und Rechtsanwaltsgesellschaft mbH

(57) **Zusammenfassung**

Vorrichtung (1) zur Generierung eines Indexes (2) für eine Datenbank (3) mit Textdokumenten (32) enthält, umfassend:
• ein Segmentierungsmodul (11), das eine Kandidatenliste (12) von Stichworten (21, 21a) für den Index (2) aufstellt;
• ein Bewertungsmodul (13), welches den in der Kandidatenliste (12) enthaltenen Stichworten (21, 21a) ein Relevanzmaß (22) zuordnet; sowie
• ein Verdichtungsmodul (14), welches die Kandidatenliste (12) auf diejenigen Stichworte (21, 21a) einschränkt, deren Relevanzmaß (22) einer vorgegebenen Bedingung (22a) genügt,
wobei das Bewertungsmodul (13)
• eine Schnittstelle (13a) zu einem Zählwerk (34), welches die Häufigkeit (31) misst, mit der die Datenbank (3), und/oder der Index (2), nach bestimmten Stichworten (21) durchsucht wird, und/oder
• eine Schnittstelle (13b) zu einer Messeinrichtung (41) eines industriellen Produktionsprozesses (4), deren Messwert (41a) ein Maß für eine

Produktionsrate und/oder Verbrauchsrate des Produktionsprozesses (4) ist, umfasst und den jeweils über die Schnittstelle (13a, 13b) erhaltenen Wert (31, 41a) in die Bildung des Relevanzmaßes (22) einbezieht.

## Beschreibung

Die Erfindung betrifft eine Vorrichtung zur Generierung eines Indexes für eine Datenbank, die durch Berücksichtigung von Messwerten die Indexierung verbessert.

### Stand der Technik

Um in einer Datenbank, die Textdokumente enthält, ein bestimmtes Textdokument aufzufinden, können die Textdokumente mit einer Volltextsuche durchsucht werden. Die Suche kann erheblich beschleunigt werden, indem aus den Textdokumenten ein Index gebildet wird und anschließend dieser Index durchsucht wird. Insbesondere kann der Index auf einem Speichermedium abgelegt sein, auf das ein schnellerer Zugriff besteht als auf die Textdokumente selbst. Dies macht sich zu Nutze, dass jedes Textdokument in dem Index nur einen kleinen Bruchteil seiner Größe an Speicherkapazität beansprucht.

Beispielsweise bilden Dokumentenmanagement-Systeme einen Index über die Datenbank, die alle im System hinterlegten Dokumente enthält. Auch bilden beispielsweise Internet-Suchmaschinen über die Datenbank der im World Wide Web verfügbaren Dokumente einen Index, der dann lokal bei der Suchmaschine gespeichert wird.

Die Wahrscheinlichkeit, dass eine Suchanfrage ein zutreffendes Resultat liefert, hängt davon ab, wie sachgerecht der Index gebildet wurde. Die Geschwindigkeit, mit der das Resultat erhalten wird, hängt davon ab, wie konzise der Index ist, d.h., wieviel Speicherkapazität jedes Dokument im Index beansprucht.

Aus der EP 1 182 581 B1 ist eine Datenbank bekannt, die ihre Einträge zum einen nach festen Kategorien und zum anderen nach frei wählbaren Stichwörtern indexiert. Die Kategorien können insbesondere zum nachträglichen Eingrenzen einer Trefferliste verwendet werden.

Aus der EP 0 862 122 B1 ist eine Suchmaschine bekannt, die eine Suchanfrage mittels eines Wörterbuchs in einen Wortvektor umwandelt und im Index Dokumente mit ähnlichen Wortvektoren ausfindig macht.

Aus der EP 0 922 260 B1 ist eine weitere Suchmaschine bekannt, die die Zuordnung eines jeden Dokuments zu einer oder mehreren Kategorien von vordefinierten Kriterien bezüglich im Dokumenttext enthaltener Stichworte abhängig macht.

### Aufgabe und Lösung

Aufgabe der vorliegenden Erfindung ist, einen sowohl sachlich zutreffenden als auch konzisen Index für eine Datenbank, die Textdokumente enthält, zu erstellen.

Diese Aufgabe wird erfindungsgemäß gelöst durch eine Vorrichtung gemäß Hauptanspruch. Weitere vorteilhafte Ausgestaltungen ergeben sich aus den darauf rückbezogenen Unteransprüchen.

### Offenbarung der Erfindung

Im Rahmen der Erfindung wurde eine Vorrichtung zur Generierung eines Indexes für eine Datenbank entwickelt. Die Datenbank enthält Textdokumente. Dabei umfasst der Begriff der Datenbank jede Sammlung von Textdokumenten sowie von Datensätzen, die neben den Textdokumenten selbst, bzw. Verweisen auf diese Textdokumente, auch beispielsweise noch Metadaten enthalten können. Die Datenbank muss nicht im Ganzen auf einem bestimmten Rechner abgelegt sein und auch nicht im Ganzen unter der Kontrolle einer einzigen Entität stehen. Sie muss nicht einmal einer zentralen Verwaltung unterstehen. Vielmehr kann die Datenbank, wie im eingangs erwähnten Szenario der Suchmaschinen, auch beispielsweise die Sammlung aller im World Wide Web zugreifbaren Dokumente sein. Der Index kann dann beispielsweise Teil der Suchmaschine sein.

Die Vorrichtung umfasst ein Segmentierungsmodul, das dazu ausgebildet ist, aus den in mindestens einem Textdokument enthaltenen Stichworten eine Kandidatenliste von Stichworten für den Index aufzustellen. Dabei kann das Segmentierungsmodul insbesondere dazu ausgebildet sein, Stoppwörter von der Aufnahme in die Kandidatenliste auszuschließen. Unter Stoppwörtern werden Wörter verstanden, die im Sprachgebrauch sehr häufig auftreten und nur wenig oder gar keine Rückschlüsse auf den Dokumentinhalt zulassen.

Die Vorrichtung umfasst weiterhin ein Bewertungsmodul, welches dazu ausgebildet ist, den in der Kandidatenliste enthaltenen Wörtern ein Relevanzmaß zuzuordnen. Dabei ist es möglich und je nach Anwendung auch sinnvoll, dass die verschiedenen Wörtern zugeordneten Relevanzmaße aneinander gekoppelt sind. So kann beispielsweise die Relevanz eines Wortes auf der Kandidatenliste auch davon abhängen, ob die Kandidatenliste gleichzeitig auch bestimmte andere Wörter enthält. Die Vorrichtung umfasst weiterhin ein Verdichtungsmodul, welches dazu ausgebildet ist, die Kandidatenliste auf diejenigen Stichworte einzuschränken, deren Relevanzmaß einer vorgegebenen Bedingung genügt. Diese Bedingung kann beispielsweise ein Schwellwert für das Relevanzmaß sein.

Das Bewertungsmodul kann nun eine Schnittstelle zu einem Zählwerk umfassen, wobei dieses Zählwerk dazu ausgebildet ist, die Häufigkeit zu messen, mit der die Datenbank, und/oder der Index, nach bestimmten Stichworten durchsucht wird. Das Zählwerk kann beispielsweise Zählerstände umfassen, die bestimmten Wörtern oder Wortkombinationen zugeordnet sind.

Alternativ oder auch in Kombination hierzu kann das Bewertungsmodul auch eine Schnittstelle zu einer Messeinrichtung eines industriellen Produktionsprozesses umfassen, deren Messwert ein Maß für die Produktionsrate mindestens eines Produkts des Produktionsprozesses, und/oder ein Maß für die Verbrauchsrate mindestens eines Edukts des Produktionsprozesses, ist.

Das Bewertungsmodul ist jeweils dazu ausgebildet, den jeweils über die Schnittstelle erhaltenen Wert in die Bildung des Relevanzmaßes einzubeziehen.

Es wurde erkannt, dass die Relevanz ein und desselben Worts für die zutreffende und zugleich konzise Indexierung nicht statisch, sondern situationsabhängig ist. Durch die genannten Schnittstellen wird das Bewertungsmodul in die Lage versetzt, die Bewertung der jeweiligen Situation anzupassen und Änderungen der Situation nachzuführen.

So kann es beispielsweise zur Beschreibung ein und desselben Sachverhalts oder Merkmals zu einem bestimmten Wort eine Vielzahl von Synonymen, Oberbegriffen oder auch weiteren Spezialisierungen geben. Geht man beispielsweise vom Begriff "italienisches Restaurant" aus, so ist in manchen Kontexten beispielsweise "Italiener" ein gängiges Synonym. Zugleich fällt "italienisches Restaurant" beispielsweise unter die Oberbegriffe "südländisches Restaurant", "mediterranes Restaurant" oder "mediterrane Küche". Weiterhin ist "italienisches Restaurant" Oberbegriff beispielsweise für "Pizzeria", "Trattoria" oder "Osteria". Jeder dieser Begriffe kann verwendet werden, um nach einem Dokument zu suchen, in dem es um ein italienisches Restaurant geht. Wird jedoch beispielsweise das Suchverhalten von Nutzern einer Internet-Suchmaschine beobachtet, so werden sich die Suchanfragen zu dem Thema nicht gleichmäßig auf diese Begriffe verteilen, und diese Verteilung kann auch mit der Zeit wechseln. So können beispielsweise zu einem bestimmten Zeitpunkt 30 % der Anfragen den Begriff "italienisches Restaurant", 30 % der Anfragen den Begriff "Italiener" und 30 % der Anfragen den Begriff "Pizzeria" verwenden, während sich die verbleibenden 10 % auf alle übrigen Begriffe verteilen. Zu diesem Zeitpunkt bietet es den größten Nutzen, ein Dokument, das sich auf ein italienisches Restaurant bezieht, mit den Begriffen "italienisches Restaurant", "Italiener" und "Pizzeria" zu indexieren und die restlichen Begriffe von der Kandidatenliste zu streichen. Es kann nun beispielsweise der Fall eintreten, dass die Tagespresse über eine Person der Zeitgeschichte berichtet und in diesem Zusammenhang eine bestimmte Trattoria namentlich erwähnt wird. Dies kann beispielsweise bewirken, dass der Begriff "Trattoria" akut ins Bewusstsein der Öffentlichkeit gerückt wird, während der Begriff "Italiener" nahezu in Vergessenheit gerät. In dieser Situation ist es vorteilhaft, an Stelle des Begriffs "Italiener" den Begriff "Trattoria" in den Index aufzunehmen.

Auch kann beispielsweise ein Unternehmen eine so große Vielzahl von Produkten herstellen, dass es unpraktisch ist, ein dieses Unternehmen betreffendes Dokument mit allen Bezeichnungen dieser Produkte zu indexieren. Es kann nun beispielsweise die öffentliche Wahrnehmung des Unternehmens in Bezug auf bestimmte Produkte mit der Nachfrage nach diesen Produkten korreliert sein, wobei sich diese Nachfrage wiederum an der Produktionsrate des jeweiligen Produktionsprozesses, und/oder an der Verbrauchsrate eines Edukts des jeweiligen Produktionsprozesses, ablesen lässt. Stellt das Unternehmen beispielsweise sowohl Produkte für die äußerliche Renovierung von Gebäuden als auch Produkte für die Renovierung von Innenräumen her, so kann es sich beispielsweise jahreszeitlich oder auf einer kürzeren Zeitskala auch abhängig von der Wetterlage verschieben, welche Art von Produkten stärker nachgefragt ist und dementsprechend auch mit einer höheren Rate produziert wird. Eine konzise und zugleich sachlich zutreffende Indexierung von Dokumenten, die das Unternehmen betreffen, kann dann beispielsweise nur die Bezeichnungen derjenigen Produkte umfassen, deren Produktionsrate aktuell oberhalb eines Schwellwerts liegt.

Der Begriff "Generierung eines Index" ist in diesem Zusammenhang nicht dahingehend eingeschränkt, dass die Vorrichtung den Index für die alle in der Datenbank enthaltenen Textdokumente oder Datensätze erzeugt. Vielmehr setzt dieser Begriff lediglich voraus, dass die Vorrichtung irgendeinen Beitrag zum Inhalt des Indexes leistet. Die Vorrichtung ist also beispielsweise auch dann eine Vorrichtung zur Generierung eines Indexes für die Datenbank, wenn sie lediglich dazu ausgebildet ist, für eine Teilmenge der in der Datenbank enthaltenen Dokumente diejenigen Stichworte zu liefern, die in den Index aufgenommen werden sollen. Die Lieferung der Stichworte kann insbesondere diejenigen Stichworte umfassen, die auf der Kandidatenliste verbleiben, nachdem diese das Verdichtungsmodul durchlaufen hat.

Beispielsweise kann die Vorrichtung dazu ausgebildet sein, für bestimmte Dokumente, wie etwa Webseiten von Unternehmen, diejenigen Stichworte zu liefern, die sinnvollerweise in den Index einer Suchmaschine aufgenommen werden sollten. "Sinnvollerweise" kann in diesem Zusammenhang insbesondere umfassen, dass
- die Wahrscheinlichkeit hoch ist, dass jemand, der genau dieses Dokument sucht, dieses an prominenter Stelle in der Trefferliste angezeigt bekommt, und/oder
- die Wahrscheinlichkeit hoch ist, dass jemand, dem das Dokument an prominenter Stelle in der Trefferliste angezeigt wird, sich für dieses Dokument interessiert.

Der letztere Punkt ist insbesondere beispielsweise dann wichtig, wenn die letztendlich ausgewählten Stichworte für die Buchung kostenpflichtiger Optionen zur Platzierung in Suchmaschinen verwendet werden. Die Tarifierungsmodelle für einige dieser Optionen sehen beispielsweise einen Preis pro Klick eines Benutzers auf das Dokument in der Trefferliste vor. Eine sachlich unzutreffende Indexierung des Dokuments kann nun dazu führen, dass das Dokument zwar sehr oft angeklickt wird, aber größtenteils von Benutzern, die danach feststellen müssen, dass das Dokument ihre Anfrage nicht treffend beantwortet. So ist beispielsweise für einen PC-Benutzer, der Linux als einziges Betriebssystem verwendet und dies auch in seiner Suchanfrage an eine Suchmaschine zum Ausdruck bringt, eine Webseite über eine nur unter Windows lauffähige Software nicht relevant. Wird gerade diese Webseite diesem Benutzer prominent angezeigt und von dem Benutzer auch angeklickt, dann ärgert sich der Benutzer darüber, dass ihm ein Produkt aufgedrängt wird, das er gar nicht verwenden kann. Zugleich hat der Inhaber der Webseite den Preis für den Klick, den die prominente Platzierung in der Trefferliste der Suchmaschine generiert hat, nutzlos vergeudet.

In einer besonders vorteilhaften Ausgestaltung umfasst die Vorrichtung zusätzlich ein Synonymwörterbuch und/oder einen Thesaurus. Das Segmentierungsmodul ist dazu ausgebildet, der Kandidatenliste mindestens ein zu einem in der Kandidatenliste enthaltenen Stichwort aus dem Synonymwörterbuch, bzw. aus dem Thesaurus, abgerufenes zusätzliches Stichwort hinzuzufügen. Dies führt zunächst dazu, dass die Anzahl der Stichworte auf der Kandidatenliste zunimmt, möglicherweise auch über die insgesamt letztendlich gewünschte Anzahl hinaus. Das Bewertungsmodul und das Verdichtungsmodul sorgen jedoch dafür, dass nur die aussagekräftigsten Stichworte auf der Kandidatenliste verbleiben.

In dem zuvor genannten Beispiel des Begriffs "italienisches Restaurant" kann also beispielsweise der Rückgriff auf das Synonymwörterbuch oder den Thesaurus die erwähnten Synonyme, Oberbegriffe und Spezialisierungen hervorbringen, die anschließend auf Relevanz geprüft werden.

Insbesondere kann beispielsweise das Verdichtungsmodul dazu ausgebildet sein, aus einer Liste, die mindestens ein in der Kandidatenliste enthaltenes Stichwort sowie mindestens ein zu diesem Stichwort aus dem Synonymwörterbuch, bzw. aus dem Thesaurus, abgerufenes zusätzliches Stichwort umfasst, anhand einer vorgegebenen Bedingung für das Relevanzmaß mindestens ein Stichwort für den Verbleib auf der Kandidatenliste auszuwählen. Beispielsweise können also in einer Auswahlrunde lediglich alle genannten Umschreibungen des Begriffs "italienisches Restaurant" miteinander konkurrieren, während Begriffe, die völlig andere Eigenschaften des Restaurants beschreiben, wie etwa die Verkehrsanbindung, unberücksichtigt bleiben.

Nach dem zuvor Beschriebenen ist die Vorrichtung spezifisch dazu ausgebildet, bei der Generierung des Indexes mit einer Internet-Suchmaschine zusammenzuwirken. Gerade derartige Suchmaschinen werden von einer Vielzahl verschiedener Benutzer bedient, deren Verhalten dahingehend, welche Begriffe zur Suche nach ein und demselben Gegenstand sie verwenden, nicht notwendigerweise konstant ist.

In einer weiteren besonders vorteilhaften Ausgestaltung ist das Bewertungsmodul spezifisch dazu ausgebildet, mit einer Messeinrichtung eines industriellen Produktionsprozesses für Speisen zusammenzuwirken. Dieser industrielle Produktionsprozess ist nicht darauf beschränkt, dass komplette Speisen oder Menüs in einer Fabrik gefertigt und verpackt an Endverbraucher abgegeben werden. Vielmehr ist es auch als industrielle Produktion von Speisen anzusehen, wenn beispielsweise in einem Restaurant der Systemgastronomie industriell vorgefertigte Komponenten nach Bedarf zu Speisen oder Menüs zusammengefügt werden.

Die Produktionsrate bestimmter Speisen kann dann beispielsweise ein Gradmesser dafür sein, welche Speisen vor Ort am populärsten sind, d.h., welche Speisen im Angebot der wahrscheinlichste Grund dafür ist, dass ein Gast das Restaurant aufgesucht hat. Wenn hier beispielsweise bestimmte Speisen deutlich hervorstechen, dann ist etwa die Indexierung einer Webseite des Restaurants zutreffend, wenn sie ein oder mehrere auf diese Speisen hindeutende Stichworte enthält. Wer diese Speisen konsumieren möchte und nach ihnen sucht, bekommt dann die Webseite des Restaurants, das für diese Speisen bekannt ist, in der Trefferliste seiner Suchmaschine an prominenter Stelle angezeigt.

Die Anpassung der Stichworte für die Indexierung an die Produktionsrate kann aber auch beispielsweise genutzt werden, um aktuell weniger populäre Speisen in den Vordergrund zu stellen. Der Produktionsprozess der Speisen kann dann in mehrerlei Hinsicht verbessert werden.

Zum einen kann durch Feedback der Produktionsrate nach einer entsprechenden Anpassung der Indexierung der tatsächliche Bedarf an diesen Speisen ermittelt werden. Wird die Indexierung beispielsweise so angepasst, dass die Webseite des Restaurants bei der Suche nach einer bestimmten Speise bevorzugt in Suchergebnissen auftaucht, und steigt anschließend die gemessene Produktionsrate für diese Speise an, so zeigt dies an, dass ein Bedarf für die Speise gegeben ist. Dies kann wiederum genutzt werden, um die Produktionsrate optimal dem Bedarf anzupassen. Je besser die Produktionsrate dem Bedarf entspricht, desto effizienter kann der Produktionsprozess in Bezug auf Zeit und Wareneinsatz gefahren werden.

Zum anderen kann beispielsweise auf eine geringe Verbrauchsrate eines Edukts, wie etwa einer verderblichen Rohware, reagiert werden, indem Speisen, bei deren Produktion dieses Edukt zum Einsatz kommt, bei der Indexierung der Webseite des Restaurants in den Vordergrund gestellt werden. Optional kann dies beispielsweise noch mit einer Preisreduzierung gekoppelt sein. Auf diese Weise kann darauf hingewirkt werden, dass möglichst viel von dem Edukt in irgendeinem Produktionsprozess eingesetzt wird. Wenn das Edukt vor dem Erreichen seines Verfallsdatums noch in einer Speise verarbeitet wird, ist es für die Effizienz des Produktionsprozesses als Ganzes ein Gewinn. Wenn das Edukt hingegen bei Erreichen des Verfallsdatums nicht verarbeitet ist, wird es zu Abfall, der kostenpflichtig entsorgt werden muss. Die Effizienz des Produktionsprozesses wird dann also im doppelten Sinne geschmälert.

Nach dem zuvor Beschriebenen ist die Vorrichtung vorteilhaft dazu ausgebildet, die Kandidatenliste in Antwort auf eine Änderung des über die Schnittstelle erhaltenen Werts fortwährend zu aktualisieren. Auf diese Weise kann die Indexierung sowohl dem aktuellen Sprachgebrauch der Suchenden als auch den Bedürfnissen des Produktionsprozesses angepasst werden.

In einer weiteren vorteilhaften Ausgestaltung umfasst die Vorrichtung weiterhin ein Glättungsmodul, welches dazu ausgebildet ist, mindestens ein Stichwort für mindestens eine vorgegebene Zeitdauer auf der Kandidatenliste zu belassen. Ein Index ist typischerweise so angelegt, dass er besonders schnell gelesen, aber im Gegenzug nur vergleichsweise langsam geschrieben werden kann. Weiterhin ist es beispielsweise aus der Sicht von Suchmaschinen ein Anzeichen für die Relevanz eines Merkmals, wenn dieses Merkmal eine gewisse zeitliche Konstanz zeigt.

Die Vorrichtung kann ganz oder teilweise computerimplementiert sein. Daher bezieht sich die Erfindung auch auf ein Computerprogramm mit maschinenlesbaren Anweisungen, die, wenn sie auf einem Computer ausgeführt werden, den Computer zu der beschriebenen Vorrichtung aufwerten. Ebenso bezieht sich die Erfindung auch auf einen maschinenlesbaren Datenträger oder ein Downloadprodukt mit dem Computerprogramm.

### Spezieller Beschreibungsteil

Nachstehend wird der Gegenstand der Erfindung anhand einer Figur erläutert, ohne dass der Gegenstand der Erfindung hierdurch beschränkt wird. Es ist gezeigt:

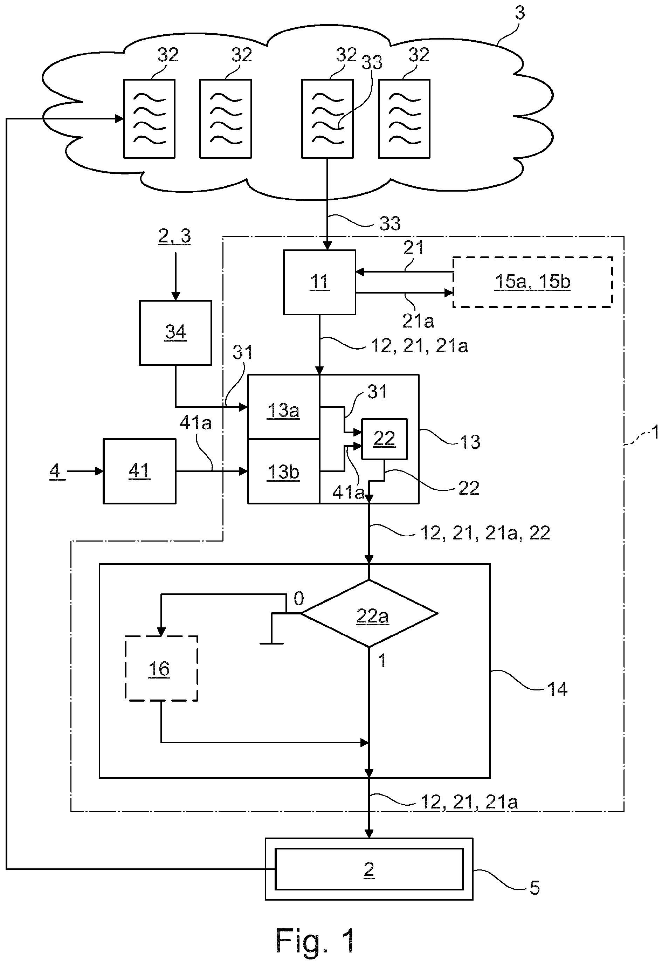

Figur 1: Ausführungsbeispiel der Vorrichtung 1.

Figur 1 zeigt ein Ausführungsbeispiel der Vorrichtung 1. Die Vorrichtung 1 dient in diesem Beispiel dazu, einen Beitrag zum Index 2 einer Suchmaschine 5 zu liefern, damit bestimmte Dokumente 32 im World Wide Web 3 zutreffen und zugleich konzise indexiert werden.

Das Segmentierungsmodul 11 der Vorrichtung 1 stellt aus den in Textdokumenten 32 enthaltenen Wörtern 33 eine Kandidatenliste 12 von Stichworten 21 für den Index 2 auf. Optional wird diese Kandidatenliste 12 noch um zusätzliche Stichworte 21a angereichert, die zu einem Stichwort 21 aus einem Synonymwörterbuch 15a, und/oder aus einem Thesaurus 15b, abgerufen werden.

Die Kandidatenliste 12 mit den Stichworten 21 und eventuellen zusätzlichen Stichworten 21a wird dem Bewertungsmodul 13 zugeführt. Das Bewertungsmodul 13 ordnet jedem Stichwort 21, 21a ein Relevanzmaß zu. Zu diesem Zweck verfügt das Bewertungsmodul 13 über eine Schnittstelle 13a zu einem Zählwerk 34, das die Häufigkeit 31 misst, mit der das World Wide Web 3, bzw. der Index 2 der Suchmaschine 5, nach bestimmten Stichworten 21 durchsucht wird. Das Zählwerk 34 muss nicht zwangsläufig in Echtzeit arbeiten, sondern kann beispielsweise auch in Form einer Datenlieferung von der Suchmaschine 5 realisiert sein.

Alternativ oder auch in Kombination verfügt das Bewertungsmodul 13 über eine Schnittstelle 13b zu einer Messeinrichtung 41 eines industriellen Produktionsprozesses 4. Der von der Messeinrichtung 41 gelieferte Messwert 41a ist ein Maß für die Produktionsrate mindestens eines Produkts des Produktionsprozesses 4, und/oder ein Maß für die Verbrauchsrate mindestens eines Edukts des Produktionsprozesses 4.

Die Häufigkeit 31, bzw. der Messwert 41a, wird innerhalb des Bewertungsmoduls 13 in die Berechnung des Relevanzmaßes 22 einbezogen.

Das Relevanzmaß 22 wird im nachgeschalteten Verdichtungsmodul 14 verwendet, um den Umfang der Kandidatenliste 12 zu reduzieren. Nur diejenigen Stichworte 21, 21a, deren Relevanzmaß 22 eine vorgegebene Bedingung 22a erfüllt (Wahrheitswert 1), verbleiben auf der Kandidatenliste 12. Erfüllt ein Stichwort 21, 21a die Bedingung 22a nicht (Wahrheitswert 0), wird es verworfen. Diese Entscheidung kann durch das optionale Glättungsmodul 16 überstimmt werden, damit das Stichwort 21, 21a für mindestens eine vorgegebene Zeitdauer auf der Kandidatenliste 12 bleibt.

Die nach dem Passieren des Verdichtungsmoduls noch auf der Kandidatenliste 12 verbliebenen Stichworte 21, 21a werden der Suchmaschine 5 zugeführt, um in deren Index 2 aufgenommen zu werden.

### Bezugszeichenliste

- 1: Vorrichtung
- 11: Segmentierungsmodul der Vorrichtung 1
- 12: Kandidatenliste mit Stichworten 21, 21a
- 13: Bewertungsmodul
- 13a: Schnittstelle des Bewertungsmoduls 13 zum Zählwerk 34
- 13b: Schnittstelle des Bewertungsmoduls 13 zur Messeinrichtung 41
- 14: Verdichtungsmodul der Vorrichtung 1
- 15a: Synonymwörterbuch der Vorrichtung 1
- 15b: Thesaurus der Vorrichtung 1
- 16: Glättungsmodul
- 2: Index
- 21: Stichwort, von Segmentierungsmodul 11 ermittelt
- 21a: zusätzliches Stichwort aus Wörterbuch 15a oder Thesaurus 15b
- 22: Relevanzmaß
- 22a: Kriterium für Relevanzmaß
- 3: Datenbank
- 31: Häufigkeit der Abfrage von Stichworten 21 in Index 2, Datenbank 3
- 32: Textdokument in Datenbank 3
- 33: Wörter in Textdokument 32
- 34: Zählwerk für Häufigkeit 31
- 4: industrieller Produktionsprozess
- 41: Messeinrichtung des Produktionsprozesses 4
- 41a: Messwert, von Messeinrichtung 41 geliefert
- 5: Suchmaschine

## Patentansprüche

1. Vorrichtung (1) zur Generierung eines Indexes (2) für eine Datenbank (3), wobei die Datenbank (3) Textdokumente (32) enthält, umfassend:
• ein Segmentierungsmodul (11), welches dazu ausgebildet ist, aus den in mindestens einem Textdokument (32) enthaltenen Wörtern (33) eine Kandidatenliste (12) von Stichworten (21, 21a) für den Index (2) aufzustellen;
• ein Bewertungsmodul (13), welches dazu ausgebildet ist, den in der Kandidatenliste (12) enthaltenen Stichworten (21, 21a) ein Relevanzmaß (22) zuzuordnen; sowie
• ein Verdichtungsmodul (14), welches dazu ausgebildet ist, die Kandidatenliste (12) auf diejenigen Stichworte (21, 21a) einzuschränken, deren Relevanzmaß (22) einer vorgegebenen Bedingung (22a) genügt,
wobei das Bewertungsmodul (13)
• eine Schnittstelle (13a) zu einem Zählwerk (34), welches dazu ausgebildet ist, die Häufigkeit (31) zu messen, mit der die Datenbank (3), und/oder der Index (2), nach bestimmten Stichworten (21) durchsucht wird, und/oder
• eine Schnittstelle (13b) zu einer Messeinrichtung (41) eines industriellen Produktionsprozesses (4), deren Messwert (41a) ein Maß für die Produktionsrate mindestens eines Produkts des Produktionsprozesses (4), und/oder ein Maß für die Verbrauchsrate mindestens eines Edukts des Produktionsprozesses (4), ist,
umfasst und dazu ausgebildet ist, den jeweils über die Schnittstelle (13a, 13b) erhaltenen Wert (31, 41a) in die Bildung des Relevanzmaßes (22) einzubeziehen.

2. Vorrichtung (1) nach Anspruch 1, wobei die Vorrichtung (1) zusätzlich ein Synonymwörterbuch (15a) und/oder einen Thesaurus (15b) umfasst und wobei das Segmentierungsmodul (11) dazu ausgebildet ist, der Kandidatenliste (12) mindestens ein zu einem in der Kandidatenliste (12) enthaltenen Stichwort (21) aus dem Synonymwörterbuch (15a), bzw. aus dem Thesaurus (15b), abgerufenes zusätzliches Stichwort (21a) hinzuzufügen.

3. Vorrichtung (1) nach Anspruch 2, wobei das Verdichtungsmodul (14) dazu ausgebildet ist, aus einer Liste, die mindestens ein in der Kandidatenliste (12) enthaltenes Stichwort (21) sowie mindestens ein zu diesem Stichwort (21) aus dem Synonymwörterbuch (15a), bzw. aus dem Thesaurus (15b), abgerufenes zusätzliches Stichwort (21a) umfasst, anhand einer vorgegebenen Bedingung (22a) für das Relevanzmaß (22) mindestens ein Stichwort (21, 21a) für den Verbleib auf der Kandidatenliste (12) auszuwählen.

4. Vorrichtung (1) nach einem der Ansprüche 1 bis 3, wobei die Vorrichtung (1) spezifisch dazu ausgebildet ist, bei der Generierung des Indexes (2) mit einer Internet-Suchmaschine (5) zusammenzuwirken.

5. Vorrichtung (1) nach einem der Ansprüche 1 bis 4, wobei das Bewertungsmodul (13) spezifisch dazu ausgebildet ist, mit einer Messeinrichtung (41) eines industriellen Produktionsprozesses (4) für Speisen zusammenzuwirken.

6. Vorrichtung (1) nach einem der Ansprüche 1 bis 5, wobei die Vorrichtung (1) dazu ausgebildet ist, die Kandidatenliste (12) in Antwort auf eine Änderung des über die Schnittstelle (13a, 13b) erhaltenen Werts fortwährend zu aktualisieren.

7. Vorrichtung (1) nach Anspruch 6, umfassend ein Glättungsmodul (16), welches dazu ausgebildet ist, mindestens ein Stichwort (21, 21a) für mindestens eine vorgegebene Zeitdauer auf der Kandidatenliste (12) zu belassen.

8. Computerprogramm, enthaltend maschinenlesbare Anweisungen, die, wenn sie auf einem Computer ausgeführt werden, den Computer zu einer Vorrichtung nach einem der Ansprüche 1 bis 7 aufwerten.
